# EUROPEAN PATENT SPECIFICATION

(11) **EP 2 040 396 B1**
(45) Date of publication and mention of the grant of the patent: **26.02.2014**
(21) Application number: 07301380.7
(22) Date of filing: 19.09.2007
(51) Int. Cl.: H04B 10/071, H04B 10/077

(54) **Method for monitoring an optical data transmission line, and optical data transmitter**
Verfahren zur Überwachung einer optischen Datenübertragungsleitung und optischer Datensender
Procédé pour la surveillance d'une ligne de transmission de données optiques, et transmetteur de données optiques

(43) Date of publication of application: 25.03.2009
(73) Proprietor: Alcatel Lucent, 75007 Paris (FR)
(72) Inventor: Schmuck, Harald, 71701, Schwieberdingen (DE)
(74) Representative: Mildner, Volker

(56) References cited:
- US-A- 6 160 649
- US-A1- 2005 041 969

## Description

The invention relates to a method for monitoring an optical data transmission line according to the preamble of claim 1 and to an optical data transmitter.

It is expected that future optical transceivers will comprise embedded OTDR measuring technique (OTDR = Optical Time Domain Reflectometry). This shall allow the monitoring of network fiber plants during the data transmission. In continuously operating networks like the OLT side in PONs (OLT = Optical Line Termination; PON = Passive Optical Network) or in most point-to-point networks, a sine wave measuring technique can be applied. At top of the data stream a swept sine wave signal is added representing the stimulus for generating Rayleigh backscattering from the fiber link. Such reflected signal than can be used to check the properties of such link.

The signal backscattered when using a single sine wave signal includes less information than from an impulse response. Therefor a series of such measurements with different frequencies of the sine wave signal is made to exclude ambiguities resulting from the periodicities of the respective individual measurements. This can be done by transforming back from the frequency domain into the time domain that here is equivalent to the distance domain. We consider using frequencies from 1 kilocycle per second to 10 Megacycles per second. The measuring signal thus is swept (in steps) between these values.

It is easy to see that such situation not only exists in connection with embedded OTDR measuring techniques or in the access area. The solution given below therefor is not restricted thereto.

This additional measuring signal will have an impact on data transmission performance. There should be a balance in order to allow a high quality OTDR measurement while avoiding significant data transmission penalty.

It is therefor a problem to improve the superimposing of a measuring signal to a data signal.

The document US2005/0041969 discloses an optical system for dynamically measuring power loss in an optical fiber, including a step of providing information representing a variation of power loss in the optical fiber.

The document US 6,160,649 discloses an optical power measuring system, in which an oscillator oscillates at a predetermined reference frequency, and in which a reference signal light sender generates light of a specific wavelength deeply modulated by output from the oscillator.

According to the invention this problem is solved by a method according to the teaching of claim 1 and an optical data transmitter according to claim 10.

By fixing the relationship between both concerned signals a constant quality can be assured. In addition a way is shown how to adapt to production spread, temperature or aging effects of the used elements in an optical data transmitter.

Further embodiments of the invention are to be found in the subclaims and the description.

In the following the invention will be further described with the aid of the accompanying drawings:
- Figure 1: shows a block diagram of an example of an optical data transmitter according to the invention.
- Figure 2: shows a timing diagram of an overall signal coming from an example of an optical data transmitter according to the invention as a result of the application of an example of a method according to the invention.
- Figure 3: shows the characteristic of a laser diode with signals appearing when performing an example of a method according to the invention.

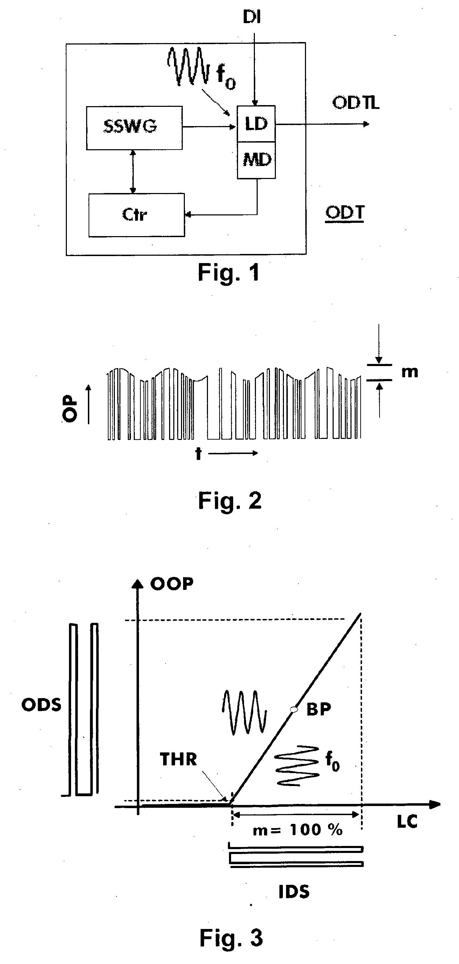

Based on figure 1 first the transmit part of an optical data transceiver according to the state of the art is described. Such optical data transmitter ODT includes a laser diode LD with an electrical data input DI and an optical output to an optical data transmission line ODTL. For monitoring purposes a swept sine wave generator SSWG is foreseen that generates an electrical output signal with a series of frequencies, here represented by the frequency f0. This signal too is applied to the input of the laser diode LD.

As a result at the optical output an optical overall signal is present, that is the result of a superposition of a data signal and a measuring signal. We assume here, that the data at the data input DI are not bursty and therefore have a constant amplitude, resulting in an optical data signal at the output also having a constant amplitude.

It is not the aim of the invention to deal with the use of such measuring signal. We expect OTDR measuring techniques. Such techniques are known and need not be described here in detail. The kind of measuring signal (here a swept sine wave signal) of course also depends on the measuring technique foreseen.

Normally in such applications optical data transmitters are combined with suitable optical data receivers to optical data transceivers.

For performing a method according to the invention also a measuring diode MD and a controller Ctr to control the swept sine wave generator SSWG are foreseen in this example. Such elements may be known already from the prior art.

Figure 2 shows the optical output signal of such optical data transmitter ODT as described with the aid of figure 1. It shows the optical power OP as a function of the time t. It is to be noted, that the relations of the amplitudes or power intensities of the involved signals are not to scale.

As already mentioned, the additional measuring signal has an impact on data transmission performance. The lower the amplitude of the measuring signal is, the better is the data transmission performance. But of course the monitoring performance should not suffer from this. In experiments a tolerable reduction of <0.3 dB was found when the "swing" m in figure 2 was about five percent of the overall intensity of the optical signal. As the value of five percent is only a raw value, there is no need to exactly define whether the top of said "swing" or the mean value thereof is to be regarded as 100 percent. The amplitude of the measuring signal as the deviation from the mean value than is about 2.5 percent.

It is clear that the chosen percentage is a function of the tolerated reduction in transmission quality and of the required quality of monitoring. As with monitoring techniques of the given kind, e.g. during normal operation, there is no need to time-limit the monitoring. And with longer measuring periods measuring results can be improved, at least to a certain extend.

In view of the high production spread of products in a mass market it is believed to be best not to adjust both signals independently, but only in relation to one another.

As can also be seen in figure 2 is the fact, that in such transceivers, also in those of the prior art, we normally deal with a very high data rate, but only with a relatively low frequency range of the measuring signal. Also insofar this figure is not to scale.

Based on figure 3 now a possibility is given on how a given fixed relation can be adjusted.

Figure 3 shows the characteristic of a laser diode, the characteristic of a light emitting diode is similar, with the optical output power OOP as the function of the (electric) laser current LC. This characteristic on the one hand shows a non-usable part up to a threshold THR, and a usable part starting therefrom. For power dissipation reasons only part of this characteristic can be used; in the figure limited with dashed lines. We consider the part from the threshold THR until this limit to be sufficiently linear to be usable. In the middle of this usable part we have a bias point BP.

At the electric input side both, the input data signal IDS, and the measuring signal with the frequency f0 are applied with the laser current LC corresponding to this bias point BP as centre. This results in an optical output data signal ODS and an optical measuring signal. Also this is not to scale. The input range corresponding to the linear part of the characteristic is referred to as "m = 100%".

According to one aspect of the invention from time to time an adjustment of the usable range is made. In the following a possibility is given how to find out such usable range and to set the amplitudes accordingly:

Starting from a bias point the amplitude of the measuring signal is increased until the output power OOP no longer linearly follows such increase.

An easy way of providing such signal is to start with a measuring signal of zero amplitude, while there is no data signal and then to increase the amplitude steadily. Such steady increase may result from a ramp signal or from incrementing in steps. During the adjustment of the usable range the measuring signal needs not be swept in frequency. Any of the measuring signal frequencies is low with respect to the frequency range of the data signal. Only a single frequency f0 is used therefor.

Detecting the non-linear range may be done by comparing consecutive relations of control signal, that is in our example the laser current LC, to optical output power OOP, in our example to be measured with the measuring diode MD.

Another possibility is the detecting of harmonics, either by evaluating the output signal of the measuring diode MD or by using a separate sensor in parallel to the measuring diode.

Preferably this is being done during a period, where there is no data signal. But as both, the overall amplitude and the linear or non-linear response in principle can be detected with or without a data signal, the absence of a data signal is not absolutely mandatory.

Similarly the correct adjustment of the bias point could be checked and improved.

## Claims

1. Method for monitoring an optical transmission line (OTDL), comprising
- generating an optical overall output signal (OP), by providing an electrical data signal (DI) and an electrical measuring signal (f0) as a laser current to an input of a laser diode (LD), wherein said electrical data signal has a substantially constant amplitude, and wherein said electrical data signal and said electrical measuring signal form a control signal,
- evaluating a resulting answering signal for said monitoring using an optical time domain reflectometry measuring technique,
wherein the amplitude of said measuring signal (f0) is set to a fixed relation to the amplitude of said data signal (DI),
**characterized by** adjusting said amplitudes of said data signal (DI) and said measuring signal (f0) in relation to one another by adjusting a used range of a characteristic of said laser diode (LD), including the steps of
- increasing the amplitude of said measuring signal (f0), starting from a bias point (BP), until it is detected that an output power of said laser diode (LD) no longer linearly follows such increase,
- using the obtained amplitude of said control signal as a nominal amplitude for said control signal, and
- deriving from said fixed relation and said obtained amplitude the amplitudes of said data signal (DI) and said measuring signal (f0).

2. Method according to claim 1, **characterized in, that** the measuring signal (f0) is increased in incremental steps.

3. Method according to claim 1, **characterized in, that** reaching the non-linear range is detected by comparing consecutive relations of said control signal to an optical output power (OOP).

4. Method according to claim 1, **characterized in, that** reaching the non-linear range is detected by detecting harmonics.

5. Optical data transmitter **characterized in** comprising means for carrying out the method according to claim 1.

## Patentansprüche

1. Verfahren zur Überwachung einer optischen Übertragungsleitung (OTDL), umfassend:
- Erzeugen eines optischen Gesamtausgangssignals (OP) durch Bereitstellen eines elektrischen Datensignals (DI) und eines elektrischen Messsignals (f0) als einen Laserstrom an einen Eingang einer Laserdiode (LD), wobei das besagte elektrische Datensignal eine im Wesentlichen konstante Amplitude aufweist, und wobei das besagte elektrische Datensignal und das besagte elektrische Messsignal ein Steuersignal bilden,
- Bewerten eines sich daraus ergebenden Meldesignals für die besagte Überwachung unter Verwendung einer optischen Zeitbereichs-Reflektometrie-Messtechnik
wobei die Amplitude des besagten Messsignals (f0) auf einen festen Bezug zu der Amplitude des besagten Datensignals eingestellt (DI) wird,
**gekennzeichnet durch** das Anpassen der besagten Amplituden des besagten Datensignals (DI) und des besagten Messsignals (f0) in Bezug zueinander **durch** Anpassen eines verwendeten Eigenschaftsspektrums der besagten Laserdiode (LD), die folgenden Schritte umfassend:
- Erhöhen der Amplitude des besagten Messsignals (f0), beginnend ab einem Arbeitspunkt (BP), bis erkannt wird, dass eine Ausgangsleistung der besagten Laserdiode (LD) einer solchen Erhöhung nicht mehr linear folgt,
- Verwenden der erhaltenen Amplitude des besagten Steuersignals als eine Nennamplitude für das besagte Steuersignal, und
- Ableiten, von dem besagten festen Bezug und von der besagten erhaltenen Amplitude, der Amplituden des besagten Datensignals (DI) und des besagten Messsignals (f0).

2. Verfahren nach Anspruch 1, **dadurch gekennzeichnet, dass** das Messsignal (f0) in schrittweisen Stufen erhöht wird.

3. Verfahren nach Anspruch 1, **dadurch gekennzeichnet, dass** das Erreichen des nicht linearen Bereichs durch Vergleichen der aufeinanderfolgenden Bezüge des besagten Steuersignals zu einer optischen Ausgangsleistung (OOP) erkannt wird.

4. Verfahren nach Anspruch 1, **dadurch gekennzeichnet, dass** das Erreichen des nichtlinearen Bereichs durch Erkennen von Harmonischen erkannt wird.

5. Optischer Datensender, **dadurch gekennzeichnet, dass** er Mittel zum Durchführen des Verfahrens gemäß Anspruch 1 umfasst.

## Revendications

1. Procédé de surveillance d'une ligne de transmission optique (OTDL), comprenant les étapes suivantes :
- génération d'un signal de sortie optique global (OP) en délivrant un signal de données électrique (DI) et un signal de mesure électrique (f0) sous la forme d'un courant de laser à une entrée d'une diode laser (LD), ledit signal de données électrique ayant une amplitude sensiblement constante et ledit signal de données électrique ainsi que ledit signal de mesure électrique formant un signal de commande,
- évaluation d'un signal de réponse résultant pour ladite surveillance en utilisant une technique de mesure optique par réflectométrie dans le domaine temporel,
l'amplitude dudit signal de mesure (f0) étant définie avec une relation fixe par rapport à l'amplitude dudit signal de données (DI),
**caractérisé par** le réglage desdites amplitudes dudit signal de données (DI) et dudit signal de mesure (f0) l'une par rapport à l'autre en réglant une plage utilisée d'une caractéristique de ladite diode laser (LD), incluant les étapes suivantes
- accroissement de l'amplitude dudit signal de mesure (f0), en commençant pas un point de polarisation (BP), jusqu'à qu'il soit détecté qu'une puissance de sortie de ladite diode laser (LD) ne suit plus linéairement un tel accroissement,
- utilisation de l'amplitude obtenue dudit signal de commande comme une amplitude nominale pour ledit signal de commande, et
- dérivation de ladite relation fixe et de ladite amplitude obtenue des amplitudes dudit signal de données (DI) et dudit signal de mesure (f0).

2. Procédé selon la revendication 1, **caractérisé en ce que** le signal de mesure (f0) est accru par étapes incrémentales.

3. Procédé selon la revendication 1, **caractérisé en ce que** l'atteinte de la plage non linéaire est détectée en comparant des relations consécutives dudit signal de commande avec une puissance de sortie optique (OOP).

4. Procédé selon la revendication 1, **caractérisé en ce que** l'atteinte de la plage non linéaire est détectée en détectant des harmoniques.

5. Transmetteur de données optique, **caractérisé en ce qu'**il comprend des moyens pour mettre en oeuvre le procédé selon la revendication 1.
